# EUROPÄISCHE PATENTANMELDUNG

(11) **EP 1 617 365 A1**
(43) Veröffentlichungstag der Anmeldung: **18.01.2006**
(21) Anmeldenummer: 05014814.7
(22) Anmeldetag: 08.07.2005
(51) Int. Cl.: G06Q 10/00

(54) **Koordination und Abwicklung von Lern-, Unterhaltungs- und/oder Wettbewerbszwecken dienenden Spielen**

(30) Priorität: 16.07.2004 DE 102004034648
(71) Anmelder: Vodafone Holding GmbH, 40213 Düsseldorf (DE)
(72) Erfinder: Klemens, Gaida, Dr., 40213 Düsseldorf (DE)
(74) Vertreter: Weisbrodt, Bernd

(57) **Zusammenfassung**

Die vorliegende Erfindung betrifft ein Verfahren zur zumindest teilautomatisierten Koordination und Abwicklung von Lern-, Unterhaltungs- und/oder Wettbewerbszwecken dienenden Spielen, bei denen die Entscheidung über Gewinnen oder Verlieren anhand wenigstens eines Vergleichs von in digitaler Form vorliegenden Bildinformationen, vorzugsweise Fotografien, unter Nutzung eines Telekommunikationsnetzes, vorzugsweise eines Mobilfunknetzes (4), bestimmt wird, wobei im Rahmen eines Spiels von wenigstens einem in einem Telekommunikationsnetz betreibbaren Telekommunikationsendgerät, vorzugsweise einem in einem Mobilfunknetz (4) betreibbaren mobilen Endgerät (1), wenigstens eine in digitaler Form vorliegende Bildinformation (11) von einem Nutzer des Telekommunikationsendgerätes über einen Nachrichtendienst des Telekommunikationsnetzes an ein Datenverarbeitungssystem (5) übertragen und seitens des Datenverarbeitungssystems (5) mit wenigstens einer seitens des Datenverarbeitungssystems (5) vorgebbar bevorrateten digitalen Bildinformation (9) verglichen wird. Ferner betrifft die Erfindung ein Telekommunikationsnetz mit zur verfahrensgemäßen Nutzung ausgebildeten Einrichtungen sowie ein Telekommunikationsendgerät zur verfahrensgemäßen Nutzung in Telekommunikationsnetzen.

## Beschreibung

Die vorliegende Erfindung betrifft ein Verfahren zur zumindest teilautomatisierten Koordination und Abwicklung von Lern-, Unterhaltungs- und/oder Wettbewerbszwecken dienenden Spielen, bei denen die Entscheidung über Gewinnen oder Verlieren anhand wenigstens eines Vergleichs von in digitaler Form vorliegenden Bildinformationen, vorzugsweise Fotografien, unter Nutzung eines Telekommunikationsnetzes, vorzugsweise eines Mobilfunknetzes erfolgt. Ferner betrifft die Erfindung ein Telekommunikationsnetz mit zur verfahrensgemäßen Nutzung ausgebildeten Einrichtungen sowie ein Telekommunikationsendgerät zur verfahrensgemäßen Nutzung in Telekommunikationsnetzen.

Lern-, Unterhaltungs- und/oder Wettbewerbszwecken dienende Spiele, bei denen Spieler auf Karten oder dergleichen Medien aufgebrachte Bildinformationen miteinander vergleichen und/oder kombinieren müssen um eine Entscheidung über Gewinnen oder Verlieren eines Spiels nach vorgegebenen Regel bestimmen zu können, sind im Stand der Technik bekannt, beispielsweise sogenannte Memory-Spiele, bei denen meist zwei identische Bildinformationen als Pärchen aufgedeckt werden müssen, oder dergleichen. Auch sind Lern-, Unterhaltungs- und/oder Wettbewerbszwecken dienende Spiele bekannt, bei denen Spieler auf Karten oder dergleichen Medien aufgebrachte Bildinformationen Sammeln und/oder Tauschen können, beispielsweise sogenannte thematisierte Sammelalben zu Sportveranstaltungen wie Fußball und dergleichen Sport oder Musikern, sowie Sammelkarten, wie beispielsweise sogenannte Pokemon- oder Yu-Gi-Oh-Karten und dergleichen.

Darüber hinaus sind sogenannte Computerspiele bekannt, die von sich an unterschiedlichen Orten befindlichen Spielern über Telekommunikationsnetze gemeinsam und/oder gegeneinander zu Lern-, Unterhaltungs- und/oder Wettbewerbszwecken gespielt werden können, insbesondere mit in Mobilfunknetzen betreibbaren mobilen Endgeräten über Mobilfunknetze.

Ferner sind im Stand der Technik in zahlreichen Ausgestaltungen in einem Mobilfunknetz betreibbare mobile Endgeräte bekannt, mit welchen sich digitale Bildinformationen, insbesondere Fotos, erfassen und verarbeiten lassen. Neben der Möglichkeit eine digitale Kamera mit dem mobilen Endgerät zu verbinden oder ein austauschbares Speichermittel einer digitalen Kamera mit dem mobilen Endgerät zu verwenden und von diesem digitale Bildinformationen in bzw. auf das mobile Endgerät zur Nutzung zu übertragen, sind ferner mobile Endgeräte bekannt, die eine integrierte digitale Kamera aufweisen. Entsprechende in einem mobilen Endgerät vorliegende digitale Bildinformationen sind beispielsweise mittels eines Multimedia-Mitteilungsdienstes (MMS) als Nachrichtendienst eines Mobilfunknetzes über selbiges und/oder über das Internet an entsprechende Multimedia-Mitteilungsdienst (MMS)-verarbeitungsfähige Endgeräte verschickbar. Entsprechende Nachrichtendienste eines Mobilfunknetzes werden bisher zum Versenden bzw. Verschicken von digitalen Bildinformationen nur unzureichend genutzt.

Dem fortwährenden Bedarf an immer neuen und außergewöhnlichen Lern-, Unterhaltungs- und/oder Wettbewerbszwecken dienenden Spielen kommen die bisher bekannten Spiele nicht bzw. nur ungenügend nach. Darüber hinaus genügen die bisher bekannten, insbesondere mobil spielbaren Spiele nicht bzw. nur beschränkt den von Spielern und/oder Spielbetreibern gestellten Lern-, Unterhaltungs- und/oder Wettbewerbsanforderungen, insbesondere hinsichtlich gemeinsam und/oder gegeneinander spielbarer Spiele. Die insbesondere mit in Mobilfunknetzen betreibbaren mobilen Endgeräten umfangreich gegebenen werbetechnischen Möglichkeiten von Bildinformationen vergleichenden und/oder kombinierenden Spielen werden bisher nicht genutzt.

Der Erfindung liegt in Anbetracht dieses Standes der Technik die **Aufgabe** zugrunde, unter Meidung der beschriebenen Nachteile dem fortwährenden Bedarf an Lern-, Unterhaltungs- und/oder Wettbewerbszwecken dienenden auf einem Vergleichen und/oder Kombinieren von Bildinformationen basierenden Spielen unter Nutzung von Telekommunikationsnetzen, insbesondere Mobilfunknetzen, nachzukommen, insbesondere hinsichtlich einer Nutzung der damit gegebenen werbetechnischen Möglichkeiten und einer umfangreichen Nutzung von Nachrichtendiensten von Mobilfunknetzen.

Zur technischen **Lösung** dieser Aufgabe wird erfindungsgemäß ein Verfahren zur zumindest teilautomatisierten Koordination und Abwicklung von Unterhaltungs- und/oder Wettbewerbszwecken dienenden Spielen, bei denen die Entscheidung über Gewinnen oder Verlieren anhand wenigstens eines Vergleichs von in digitaler Form vorliegenden Bildinformationen, vorzugsweise Fotografien, unter Nutzung eines Telekommunikationsnetzes, vorzugsweise eines Mobilfunknetzes, bestimmt wird, vorgeschlagen, wobei im Rahmen eines Spiels von wenigstens einem in einem Telekommunikationsnetz betreibbaren Telekommunikationsendgerät, vorzugsweise einem in einem Mobilfunknetz betreibbaren mobilen Endgerät, wenigstens eine in digitaler Form vorliegende Bildinformation von einem Nutzer des Telekommunikationsendgerätes über einen Nachrichtendienst des Telekommunikationsnetzes an ein Datenverarbeitungssystem übertragen und seitens des Datenverarbeitungssystems mit wenigstens einer seitens des Datenverarbeitungssystems vorgebbar bevorrateten digitalen Bildinformation verglichen wird.

Der Erfindung liegt die Erkenntnis zugrunde, dass der fortwährende Bedarf an immer neuen und außergewöhnlichen Lern-, Unterhaltungs- und/oder Wettbewerbszwecken dienenden Spielen befriedigt werden kann, wenn unter Nutzung eines Telekommunikationsnetzes, vorzugsweise eines Mobilfunknetzes, in digitaler Form vorliegende Bildinformationen, vorzugsweise Fotografien, im Rahmen eines insbesondere mobil durchführbaren Spiels zu Lern-, Unterhaltungs- und/oder Wettbewerbszwecken miteinander verglichen werden. Die Erfindung macht sich dabei weiter die Erkenntnis zu eigen, die insbesondere mit in Mobilfunknetzen betreibbaren mobilen Endgeräten umfangreich gegebenen werbetechnischen Möglichkeiten von Bildinformationen vergleichenden Spielen zu nutzen und gleichzeitig die Nutzung entsprechender Nachrichtendienste eines Telekommunikationsnetzes, vorzugsweise eines Mobilfunknetzes, zum Versenden bzw. Verschicken von digitalen Bildinformationen weiter zu steigern.

In einer vorteilhaften Ausgestaltung der Erfindung erfolgt im Rahmen des Vergleichs wenigstens eine Feststellung des Grades der Ähnlichkeit zwischen der seitens des Datenverarbeitungssystems vorgebbar bevorrateten digitalen Bildinformation und wenigstens eines Teilausschnitts der über den Nachrichtendienst des Telekommunikationsnetzes von dem Nutzer des Telekommunikationsendgerätes an das Datenverarbeitungssystem übertragenen digitalen Bildinformation. Die Berücksichtigung wenigstens eines Teilausschnitts ist dabei besonders vorteilhaft, da insbesondere unterwegs mobil mit einer digitalen Kamera entsprechend dem jeweiligen erfindungsgemäßen Spiel erfasste Fotografien als Bildinformationen das als Bildinformation zu erfassende Objekt nicht zwingend genau in dem Format und/oder der Position des entsprechenden Objektes seitens der in dem Datenverarbeitungssystems vorgebbar bevorrateten digitalen Bildinformation erfassen. Vorteilhafterweise umfasst die Feststellung des Grades der Ähnlichkeit eine seitens des Datenverarbeitungssystems vorgebbare Mindestähnlichkeit. In einer weiteren vorteilhaften Ausgestaltung der Erfindung erfolgt die Feststellung des Grades der Ähnlichkeit in seitens des Datenverarbeitungssystems vorgebbaren Stufen, vorzugsweise in Stufen von nicht ähnlich bis identisch. Dabei werden vorteilhafterweise den Gesamteindruck prägende Bildbestandteile und/oder Kombinationen von den Gesamteindruck prägenden Bildbestandteilen für die Abstufung der Ähnlichkeit verwendet.

Erfindungsgemäß wird anhand des Ergebnisses des Vergleichs seitens des Datenverarbeitungssystems wenigstens eine Information über Gewinnen oder Verlieren des Spiels ermittelt, anhand dieser Information wenigstens eine über einen Nachrichtendienst des Telekommunikationsnetzes übertragbare Nachricht erzeugt und diese Nachricht über einen Nachrichtendienst des Telekommunikationsnetzes an das Telekommunikationsendgerät des Nutzers übertragen. Die Information umfasst vorteilhafterweise eine Kennung oder dergleichen Information die zur Gewinnaktivierung und/oder -ausschüttung von dem jeweiligen Nutzer über das Telekommunikationsnetz an einen vorteilhafterweise mit der Kennung oder dergleichen Information bekannt gegebenen Empfänger zu senden ist. Dazu wird vorteilhafterweise mit der Kennung oder dergleichen Information eine anzurufende Rufnummer bekannt gegeben. In einer bevorzugten Ausgestaltung der Erfindung ist die Kennung oder dergleichen Information zur Gewinnaktivierung und/oder -ausschüttung von dem jeweiligen Nutzer über einen Nachrichtendienst eines Mobilfunknetzes an den mit der Kennung oder dergleichen Information bekannt gegebenen Empfänger zu senden.

In einer weiteren vorteilhaften Ausgestaltung der Erfindung wird die seitens des Datenverarbeitungssystems vorgebbar bevorratete digitale Bildinformation von dem Betreiber des Telekommunikationsnetzes vorgegeben und in das Datenverarbeitungssystem eingestellt. Das erfindungsgemäße Spiel ist so vorteilhafterweise von dem Betreiber des Telekommunikationsnetzes, vorzugsweise eines Mobilfunknetzes, betreibbar und beispielsweise zu Kundenbindungszwecken nutzbar. In einer weiteren vorteilhaften Ausgestaltung der Erfindung wird die seitens des Datenverarbeitungssystems vorgebbar bevorratete digitale Bildinformation von einem entsprechende Spiele über Nachrichtendienste eines Telekommunikationsnetzes anbietenden Dienstleister vorgegeben und in das Datenverarbeitungssystem eingestellt. Der Betreiber des Telekommunikationsnetzes, vorzugsweise eines Mobilfunknetzes, kann so Drittanbietern in seinem Netz eine Anwendungsplattform zur Nutzung erfindungsgemäßer Spiele anbieten und das Netz entsprechend weiter auslasten.

In einer besonders vorteilhaften Ausgestaltung der Erfindung wird die seitens des Datenverarbeitungssystems vorgebbar bevorratete digitale Bildinformation von wenigstens einem Nutzer eines Telekommunikationsendgerätes vorgegeben und in das Datenverarbeitungssystem eingestellt, vorzugsweise unter Nutzung eines Nachrichtendienstes des Telekommunikationsnetzes. Durch diese Maßnahme wird Nutzern die Möglichkeit geschaffen, erfindungsgemäße Spiele weitestgehend unabhängig von dem Betreiber des Telekommunikationsnetzes durchführen zu können. Dabei können die Inhalte und die Ausgestaltung der erfindungsgemäß durchzuführenden Spiele vorteilhafterweise von den Nutzern selbst bestimmt und vorgegeben werden.

Vorteilhafterweise kann ein Nutzer eines Telekommunikationsendgerätes digitale Bildinformationen speichern, vorzugsweise anerkannt ähnliche digitale Bildinformationen, die beispielsweise für ein Gewinnen des Spiels bereits bewertet und mit einer Rangfolge, Punkten oder dergleichen, entsprechend der Feststellung des Grades der Ähnlichkeit in seitens des Datenverarbeitungssystems vorgebbaren Stufen, vorzugsweise in Stufen von nicht ähnlich bis identisch, versehen wurden. Gemäß einer weiteren vorteilhaften Ausgestaltung der Erfindung kann ein Nutzer eines Telekommunikationsendgerätes mit wenigstens einem weiteren Nutzer eines Telekommunikationsendgerätes digitale Bildinformationen austauschen, vorzugsweise unter Nutzung eines Nachrichtendienstes des Telekommunikationsnetzes.

Vorteilhafterweise ist der Nachrichtendienst ein Multimedia-Mitteilungsdienst (MMS). In einer weiteren vorteilhaften Ausgestaltung der Erfindung ist der Nachrichtendienst ein eine HTTP (HyperText Transfer Protocol (Hypertext-Übertragungsprotokoll))-Verbindung nutzender Dienst. Dadurch ist es erfindungsgemäß ermöglicht, auch größere Datenmengen an digitalen Bildinformationen zu übertragen.

In einer weiteren besonders vorteilhaften Ausgestaltung der Erfindung kann ein Nutzer eines Telekommunikationsendgerätes mit wenigstens einem weiteren Nutzer eines Telekommunikationsendgerätes gemeinsam als eine Gruppe an einem Spiel teilnehmen. Vorteilhafterweise kann ein Nutzer eines Telekommunikationsendgerätes gegen wenigstens eine weiteren Nutzer eines Telekommunikationsendgerätes antreten und an einem Spiel teilnehmen. Ferner können vorteilhafterweise erfindungsgemäße Gruppen von Nutzern gegeneinander antreten und an einem Spiel teilnehmen. Durch diese Maßnahmen werden die Bedürfnisse und Anforderungen der Nutzer bezüglich Lern-, Unterhaltungs- und/oder Wettbewerbszwecken dienender Spiele noch weitergehender befriedigt und die Nutzerzahl eines erfindungsgemäßen Spiels und damit die Nutzung des Telekommunikationsnetzes weiter erhöht.

Vorteilhafterweise sind die seitens des Telekommunikationsendgerätes vorliegenden digitalen Bildinformationen mit einer digitalen Kamera erfasste Bildinformationen. Vorteilhafterweise ist die digitale Kamera mit dem Telekommunikationsendgerät verbindbar, vorzugsweise Bestandteil des Telekommunikationsendgerätes, welches in einer besonders bevorzugten Ausgestaltung der Erfindung ein in einem Mobilfunknetz betreibbares mobiles Endgerät ist. Das in einem Mobilfunknetz betreibbare mobile Endgerät ist in einer konkreten Ausgestaltung der Erfindung vorteilhafterweise ein Multimedia-Mitteilungsdienst (MMS)-fähiges Mobilfunktelefon mit integrierter digitaler Kamera.

Vorteilhafterweise sind die seitens des Telekommunikationsendgerätes vorliegenden digitalen Bildinformationen in einem digitalen Speichermittel des Telekommunikationsendgerätes gespeichert. Das Speichermittel ist vorteilhafterweise austauschbar und vorzugsweise vom Typ Compact Flash, Multimedia Card (MMC), Secure Digital (SD) Card, Smart Media (SM) Card, IBM Microdrive oder Sony Memory Stick.

In einer weiteren vorteilhaften Ausgestaltung der Erfindung müssen im Rahmen eines Spiels wenigstens zwei verschiedene digitale Bildinformationen, vorzugsweise zu vorgebbaren thematisierten Inhalten, von dem wenigstens einen Nutzer des Telekommunikationsendgerätes an das Datenverarbeitungssystem übertragen werden. Dadurch sind vorteilhafterweise Spiele mit Fortsetzungscharakter oder Spiele bei denen als Aufgabe Objekte gesucht und vorliegend erfindungsgemäß fotografiert werden müssen, ähnlich beispielsweise sogenannter "Schnitzeljagden", durchführbar. Gemäß einer weiteren Ausgestaltung der Erfindung müssen im Rahmen des Spiels erfindungsgemäßen Spiels digitale Bildinformationen miteinander kombiniert werden.

In einer weiteren Ausgestaltung der Erfindung ist das verfahrensgemäß durchzuführende Spiel ein Puzzlespiel, ein Bildinformationen-Sammelspiel nach Art von thematisierten Sammelalben zu Sportveranstaltungen wie Fußball und dergleichen Sport oder Musikern, sowie Sammelkarten, wie beispielsweise sogenannten Pokemon- oder Yu-Gi-Oh-Karten und dergleichen. Eine weitere Ausgestaltung der Erfindung sieht vor, dass das verfahrensgemäß durchzuführende Spiel ein Spiel zur Wiedererkennung von Bildinformationen ist, vorzugsweise zur Wiedererkennung von wenigstens zwei identischen Bildinformationen nach Art eines Memory- oder Bingo-Spiels.

Gegenstand der Erfindung ist ferner ein Telekommunikationsnetz mit zur verfahrensgemäßen Nutzung ausgebildeten Einrichtungen, vorzugsweise wenigstens einem Datenverarbeitungssystem eines Mobilfunknetzes und/oder wenigstens einem mit einem Mobilfunknetz verbindbaren bzw. integrierten Datenverarbeitungssystem.

Darüber hinaus betrifft die Erfindung ein Telekommunikationsendgerät zur Nutzung in Telekommunikationsnetzen, welches zur Ausführung eines erfindungsgemäßen Verfahrens ausgebildet ist. Vorteilhafterweise ist das Telekommunikationsendgerät ein in Mobilfunknetzen betreibbares mobiles Endgerät, vorzugsweise ein Mobilfunktelefon, besonders bevorzugt ein Multimedia-Mitteilungsdienst (MMS)-fähiges Mobilfunktelefon mit integrierter digitaler Kamera.

Weitere Einzelheiten, Merkmale und Vorteile der Erfindung werden nachfolgend anhand des in der Figur der Zeichnung dargestellten Ausführungsbeispiels sowie anhand der nachfolgenden Konzepte möglicher Ausführungsbeispiele näher erläutert. Dabei zeigt:

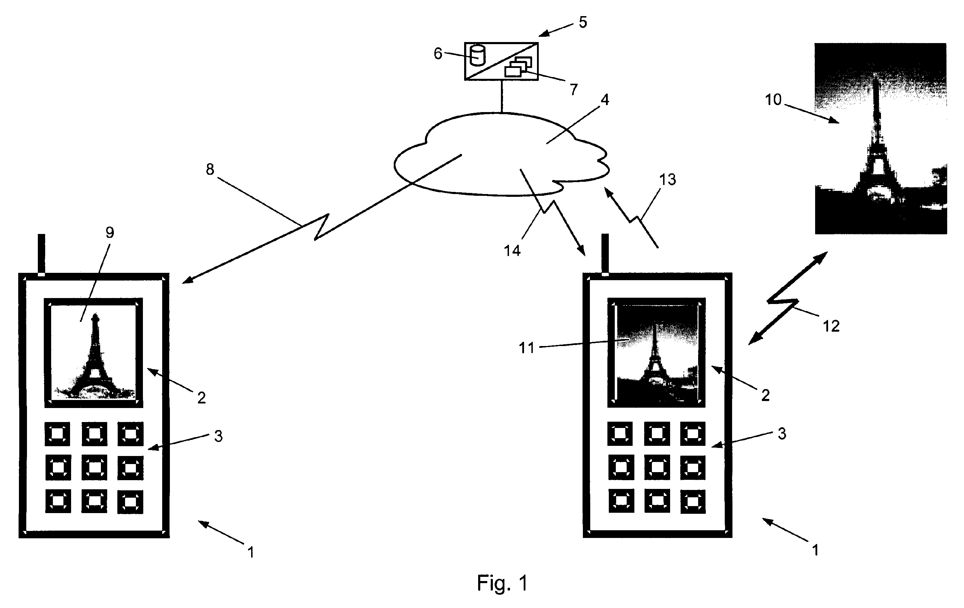

- Fig. 1: in einer schematischen Darstellung die prinzipielle Funktionsweise eines Ausführungsbeispiels des erfindungsgemäßen Verfahrens.

Fig. 1 zeigt den prinzipiellen Ablauf eines Verfahrens zur zumindest teilautomatisierten Koordination und Abwicklung eines Lern-, Unterhaltungs- und/oder Wettbewerbszwecken dienenden Spiels. Dabei weisen Teilnehmer des Spiels ein in einem Mobilfunknetz 4 - vorliegend gemäß dem GSM- und/oder UMTS-Funknetzstandard - betreibbares mobiles Endgerät 1 auf. Das mobile Endgerät 1 weist ein Display 2 als Anzeigeeinrichtung zur optischen Wiedergabe von Informationen und eine mehrere Tasten umfassende Eingabeeinrichtung 3 zur Erfassung von insbesondere Bedien- und/oder Steuerinformationen umfassenden Informationen auf. Das mobile Endgerät 1 ist vorliegend ein in dem Mobilfunknetz 4 betreibbares Mobilfunktelefon 1 mit in Fig. 1 nicht explizit dargestellter integrierter digitaler Kamera. Die digitale Kamera dient vorliegend zur Erfassung von Fotographien als Bildinformationen mit dem mobilen Endgerät 1. An das Mobilfunknetz 2 angeschlossen beziehungsweise Bestandteil des Mobilfunknetzes 4 ist ein Datenverarbeitungssystem 5, welches eine in Fig. 1 nicht explizit dargestellte Rechenanlage aufweist. Seitens des Datenverarbeitungssystems 5, vorliegend seitens der Rechenanlage des Datenverarbeitungssystems 5, ist eine Datenbank 6 mit darin bevorrateten digitalen Bildinformationen vorhanden, welche von einer seitens der Rechenanlage laufenden beziehungsweise ausgeführten Anwendung 7 zur Durchführung des Lern-, Unterhaltungs- und/oder Wettbewerbszwecken dienenden Spiels genutzt wird.

Im Rahmen des verfahrensgemäßen Spiels erhält der Nutzer des mobilen Endgerätes 1 über das Mobilfunknetz 4 von der seitens des Datenverarbeitungssystems 5 laufenden Anwendung 7 mittels eines Nachrichtendienstes des Mobilfunknetzes 4, vorliegend mittels MMS, eine Spielaufforderung 8, beispielsweise "Mache ein Foto von diesem Bauwerk! So ähnlich wie möglich! Und schicke dieses per MMS an FOTOSPIELE". Dabei wird an das mobile Endgerät 1 mit der als MMS ausgebildeten Spielaufforderung 8 eine von der Anwendung 7 aus der Datenbank 6 des Datenverarbeitungssystems 5 für das jeweilige Spiel ausgewählte digitale Bildinformation 9 an das mobile Endgerät 1 des Nutzers übertragen und seitens der Anzeigeeinrichtung 2 des mobilen Endgerätes 1 mit der Spielaufforderung wiedergegeben. Die Spielaufforderung kann dabei bei Bedarf seitens des mobilen Endgerätes 1 von dem Nutzer des mobilen Endgerätes 1 gespeichert werden.

Anschließend macht der Nutzer des mobilen Endgerätes 1 bei Auffinden des beziehungsweise eines der digitalen Bildinformation 9 gemäß der Spielaufforderung 8 entsprechenden realen Information 10, vorliegend einem Bauwerk, mit seinem mobilen Endgerät 1 mittels dessen digitaler Kamera eine Aufnahme beziehungsweise Foto 11 derselben beziehungsweise desselben. Die Aufnahme des Fotos 11 von dem Bauwerk 10 ist in Fig. 1 durch den mit dem Bezugszeichen 12 gekennzeichneten Doppelpfeil symbolisch dargestellt. Das aufgenommene Foto 11 wird vorliegend seitens der Anzeigeeinrichtung 2 des mobilen Endgerätes 1 dargestellt.

Der Nutzer des mobilen Endgerätes 1 sendet dann über einen Nachrichtendienst des Mobilfunknetzes 4, vorliegend mittels MMS 13, eine das Foto 11 aufweisende Nachricht (MMS) 13 an das Datenverarbeitungssystem 5. Die Versendung der MMS 13 erfolgt dabei unter Verwendung der vorliegend "FOTOSPIELE" genannten MMS-Adresse seitens des Mobilfunknetzes 4 beziehungsweise des Datenverarbeitungssystems 5 seitens des Mobilfunknetzes 4.

Seitens des Datenverarbeitungssystems 5 wird die von dem Nutzer des mobilen Endgerätes 1 mittels der MMS 13 übertragene digitale Bildinformation 11, vorliegend das mit der MMS 13 übertragene Foto 11, mit der digitalen Bildinformation 9 aus der Datenbank 6 im Rahmen der Anwendung 7 verglichen. Im Rahmen des Vergleichs erfolgt dabei eine Feststellung des Grades der Ähnlichkeit zwischen der seitens der Datenbank 6 des Datenverarbeitungssystems 5 bevorrateten digitalen Bildinformation 9 und dem mit der MMS 13 über das Mobilfunknetz 4 an das Datenverarbeitungssystem 5 übertragene Foto 11. Bei Erreichen eines Mindestgrades an Ähnlichkeit wird dabei von der Anwendung 7 des Datenverarbeitungssystems 5 über das Mobilfunknetz 4 mit einem Nachrichtendienst des Mobilfunknetzes 4, vorliegend vorzugsweise mittels SMS, eine Gewinnbenachrichtigung an das mobile Endgerät 1 übertragen.

Nachfolgend werden Konzepte möglicher Ausführungsbeispiele beschrieben:
MMS-Fotospiele

### Grundprinzip:

Ein vorgegebenes Bild bzw. Foto anderswo "nachfotografieren" und dabei ein möglichst ähnliches Foto ("Foto-Kopie") zu vorgegebenem Bild bzw. Foto ("Originalbild bzw. -foto") machen und gewinnen.

### Technikprinzip:

Fernvergleich von Bildern bzw. Fotos. Telekommunikationsgestütztes Verfahren zum Fernvergleich der Ähnlichkeit von Fotos. "Foto-Kopie" wird mit Digitalkamera aufgenommen und mit Telekommunikationsendgerät (Mobilfunktelefon, PC oder dergleichen) über Telekommunikationsnetz (GPRS, UMTS, POTS, ISDN, DSL oder dergleichen) mit geeignetem Nachrichtendienst bzw. Datenübertragungsprotokoll (MMS, Email, FTP oder dergleichen) an Datenverarbeitungssystem gesendet, auf dem das "Originalbild bzw. -foto" abgelegt ist und auf dem der Vergleich mit der "Foto-Kopie" vorgenommen wird zur Feststellung des Ähnlichkeitsgrads bzw. der Erzielung einer festlegbaren Mindestähnlichkeit mit verschiedenen Schwierigkeitsstufen von "gar nicht ähnlich" bis "identisch".

### Kommerzialisierung für Telekommunikationsnetzbetreiber:

- Vermarktung der Anwendungsplattform an Drittanbieter
- Vermarktung als Dienste des Telekommunikationsnetzbetreibers

### Anwendungstypen:

1. MMS-Sammelalbum/Schnitzeljagd (1-to-many)
   *Match-the-photo, photo match, hunt-the-photo, photo hunting*
   Konzept:
   Fotoreihe (themen-, produkt-, und/oder unternehmensspezifisch) entweder von Beginn an vollständig ("Sammelalbum") oder Foto für Foto nacheinander ("Schnitzeljagd") vorgegeben in WAP, Web, Print, Teletext, auf Produkten, Postern, Flyern oder dergleichen, für das ähnliche Fotos anderswo nachfotografiert werden müssen. Gewinner ist derjenige, der zuerst die Originalfotoreihe mit ähnlichen Fotos komplett nachfotografiert hat. Anerkannt ähnliche Fotos können auch mehrfach gesammelt und mit anderen Spielteilnehmern getauscht werden, vorzugsweise über MMS-Versendung.
   Adressierte Konsumentenbedürfnisse und Trends:
   - Spaß am Ähnlichkeitsspiel: "Was ist das im Originalfoto?", "Wo finde ich ein ähnliches Objekt, Bild oder dergleichen zum Nachfotografieren?", "Wird mein Foto wohl als ähnlich anerkannt?";
   - Fotowut, mit Digitalkameras "einfach alles" zu fotografieren;
   - Prämienwut, mit Punktesammeln Prämien ergattern, beispielsweise Miles & More, Payback, Tanken & Punkten und dergleichen;
   - TV-Gewinnspielwut, Rufnummern anrufen um gegebenenfalls etwas zu gewinnen;
   - Spiel- und Tauschspaß nach Art von Klebebild-Sammelalben (Fußball oder dergleichen);
   - Spiel- und Tauschspaß nach Art von Sammelkarten ("Pokemon" oder dergleichen);
   - Spielspaß nach Art von Puzzles (nach richtigen Teilen suchen);
   - Spielspaß nach Art von "Schnitzeljagd";
   - Spielspaß und Gewinnreiz nach Art von "Bingo", "Memory", oder "Der Grosse Preis";
   - Community Building: Gegeneinander oder miteinander spielen;
   Dienstanbieter und Geschäftsziele:
   - Telekommunikationsnetzbetreiber stellt Diensteplattform bereit, bietet Spiele an und lobt gegebenenfalls Preise/Prämien aus, um MMS-Verkehr zu generieren und gegebenenfalls entsprechende Erlöse zu erzielen;
   - Drittanbieter (Mobilmarketingbetreiber) nutzt und/oder vermarktet Diensteplattform des Telekommunikationsnetzbetreibers, bietet Spiele an und lobt gegebenenfalls Preise/Prämien aus, um Unternehmen und/oder Produkte zu bewerben und die Kundenbindung mit integriertem Produkt-WAP-Web-Erlebnis zu verbessern und gegebenenfalls entsprechende Erlöse zu erzielen;
2. MMS-Fotos Abschießen (1-to-1/ many-to-many)
   *Shot-the-photo, photo shooting*
   Konzept:
   Individuelle Fotoserien zweier oder mehrerer Spieler (Fotos selbst erstellt und zusammengestellt, vorgegebene Fotos ausgewählt und zusammengestellt oder Serie vorgegeben und ausgewählt) werden in WAP oder Web für die Mitspieler zum Nachfotografieren vorgestellt; Gewinner ist derjenige, der zuerst Fotokopien aller Originalfotos des/der Gegenspieler(s) fotografiert hat. Es können auch Spielergemeinschaften gebildet werden.
   Adressierte Konsumentenbedürfnisse und Trends:
   - Spaß am Ähnlichkeitsspiel: "Was ist das im Originalfoto?", "Wo finde ich ein ähnliches Objekt, Bild oder dergleichen zum Nachfotografieren?", "Wird mein Foto wohl als ähnlich anerkannt?";
   - Fotowut, mit Digitalkameras "einfach alles" zu fotografieren;
   - Spielspaß nach Art von Puzzles (nach richtigen Teilen suchen);
   - Spielspaß nach Art von "Schiffeversenken";
   - Spielspaß nach art von "Gotscha";
   - Community Building: Gegeneinander oder miteinander spielen;
   Dienstanbieter und Geschäftsziele:
   - Telekommunikationsnetzbetreiber stellt Diensteplattform bereit und bietet Initiierung und/oder Durchführung von Spielen an, um MMS-Verkehr zu generieren und gegebenenfalls entsprechende Erlöse zu erzielen;
   - Drittanbieter (Mobilfunkspieleanbieter) nutzt und/oder vermarktet Diensteplattform des Telekommunikationsnetzbetreibers, und bietet Initiierung und/oder Durchführung von Spielen an um MMS-Verkehr zu generieren und gegebenenfalls entsprechende Erlöse zu erzielen;

Das in der Figur der Zeichnung dargestellte Ausführungsbeispiel der Erfindung und die beschriebenen Konzepte möglicher Ausführungsbeispiele dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display (mobiles Endgerät (1))
- 3: Eingabeeinrichtung/Tastatur (mobiles Endgerät (1))
- 4: Mobilfunknetz
- 5: Datenverarbeitungssystem
- 6: Datenbank mit Bildinformationen (Datenverarbeitungssystem (5))
- 7: Anwendung/Vergleich (Datenverarbeitungssystem (5))
- 8: Spielaufforderung/MMS
- 9: digitale Bildinformation (Bauwerk) aus Datenbank (6) (Spielaufforderung (8))
- 10: reale Information/Bauwerk
- 11: Foto von realer Information/Bauwerk (10)
- 12: Aufnahme Foto mit mobilem Endgerät (1)
- 13: Nachricht/MMS von mobilem Endgerät (1) an Datenverarbeitungssystem (5)
- 14: Nachricht/Gewinnbenachrichtigung von Datenverarbeitungssystem (5) an mobilem Endgerät (1)

## Patentansprüche

1. Verfahren zur zumindest teilautomatisierten Koordination und Abwicklung von Lern-, Unterhaltungs- und/oder Wettbewerbszwecken dienenden Spielen, bei denen die Entscheidung über Gewinnen oder Verlieren anhand wenigstens eines Vergleichs von in digitaler Form vorliegenden Bildinformationen, vorzugsweise Fotografien, unter Nutzung eines Telekommunikationsnetzes, vorzugsweise eines Mobilfunknetzes (4), bestimmt wird, wobei im Rahmen eines Spiels von wenigstens einem in einem Telekommunikationsnetz betreibbaren Telekommunikationsendgerät, vorzugsweise einem in einem Mobilfunknetz (4) betreibbaren mobilen Endgerät (1), wenigstens eine in digitaler Form vorliegende Bildinformation (11) von einem Nutzer des Telekommunikationsendgerätes über einen Nachrichtendienst des Telekommunikationsnetzes an ein Datenverarbeitungssystem (5) übertragen und seitens des Datenverarbeitungssystems (5) mit wenigstens einer seitens des Datenverarbeitungssystems (5) vorgebbar bevorrateten digitalen Bildinformation (9) verglichen wird.

2. Verfahren nach Anspruch 1, **dadurch gekennzeichnet, dass** im Rahmen des Vergleichs wenigstens eine Feststellung des Grades der Ähnlichkeit zwischen der seitens des Datenverarbeitungssystems (5) vorgebbar bevorrateten digitalen Bildinformation (9) und wenigstens eines Teilausschnitts der über den Nachrichtendienst des Telekommunikationsnetzes von dem Nutzer des Telekommunikationsendgerätes an das Datenverarbeitungssystem (5) übertragenen digitalen Bildinformation (11) erfolgt.

3. Verfahren nach Anspruch 2, **dadurch gekennzeichnet, dass** die Feststellung des Grades der Ähnlichkeit eine seitens des Datenverarbeitungssystems (5) vorgebbare Mindestähnlichkeit umfasst.

4. Verfahren nach Anspruch 2 oder Anspruch 3, **dadurch gekennzeichnet, dass** die Feststellung des Grades der Ähnlichkeit in seitens des Datenverarbeitungssystems (5) vorgebbaren Stufen, vorzugsweise in Stufen von nicht ähnlich bis identisch, erfolgt.

5. Verfahren nach einem der Ansprüche 1 bis 4, **dadurch gekennzeichnet, dass** anhand des Ergebnisses des Vergleichs seitens des Datenverarbeitungssystems (5) wenigstens eine Information über Gewinnen oder Verlieren des Spiels ermittelt, anhand dieser Information wenigstens eine über einen Nachrichtendienst des Telekommunikationsnetzes übertragbare Nachricht erzeugt und diese Nachricht über einen Nachrichtendienst des Telekommunikationsnetzes an das Telekommunikationsendgerät des Nutzers übertragen wird.

6. Verfahren nach einem der Ansprüche 1 bis 5, **dadurch gekennzeichnet, dass** die seitens des Datenverarbeitungssystems (5) vorgebbar bevorratete digitale Bildinformation (9) von dem Betreiber des Telekommunikationsnetzes vorgegeben und in das Datenverarbeitungssystem (5) eingestellt wird.

7. Verfahren nach einem der Ansprüche 1 bis 6, **dadurch gekennzeichnet, dass** die seitens des Datenverarbeitungssystems (5) vorgebbar bevorratete digitale Bildinformation (9) von einem entsprechende Spiele über Nachrichtendienste eines Telekommunikationsnetzes anbietenden Dienstleister vorgegeben und in das Datenverarbeitungssystem (5) eingestellt wird.

8. Verfahren nach einem der Ansprüche 1 bis 7, **dadurch gekennzeichnet, dass** die seitens des Datenverarbeitungssystems (5) vorgebbar bevorratete digitale Bildinformation (9) von wenigstens einem Nutzer eines Telekommunikationsendgerätes vorgegeben und in das Datenverarbeitungssystem eingestellt wird, vorzugsweise unter Nutzung eines Nachrichtendienstes des Telekommunikationsnetzes.

9. Verfahren nach einem der Ansprüche 1 bis 8, **dadurch gekennzeichnet, dass** ein Nutzer eines Telekommunikationsendgerätes digitale Bildinformationen (9, 11) speichern kann, vorzugsweise anerkannt ähnliche digitale Bildinformationen (11) nach einem der Ansprüche 2 bis 5.

10. Verfahren nach einem der Ansprüche 1 bis 9, **dadurch gekennzeichnet, dass** ein Nutzer eines Telekommunikationsendgerätes mit wenigstens einem weiteren Nutzer eines Telekommunikationsendgerätes digitale Bildinformationen (9, 11) austauschen kann, vorzugsweise unter Nutzung eines Nachrichtendienstes des Telekommunikationsnetzes.

11. Verfahren nach einem der Ansprüche 1 bis 10, **dadurch gekennzeichnet, dass** der Nachrichtendienst ein Multimedia-Mitteilungsdienst (MMS) ist.

12. Verfahren nach einem der Ansprüche 1 bis 11, **dadurch gekennzeichnet, dass** der Nachrichtendienst ein eine HTTP-Verbindung nutzender Dienst ist.

13. Verfahren nach einem der Ansprüche 1 bis 12, **dadurch gekennzeichnet, dass** ein Nutzer eines Telekommunikationsendgerätes mit wenigstens einem weiteren Nutzer eines Telekommunikationsendgerätes gemeinsam als eine Gruppe an einem Spiel teilnehmen kann.

14. Verfahren nach einem der Ansprüche 1 bis 13, **dadurch gekennzeichnet, dass** ein Nutzer eines Telekommunikationsendgerätes gegen wenigstens eine weiteren Nutzer eines Telekommunikationsendgerätes antreten und an einem Spiel teilnehmen kann.

15. Verfahren nach einem der Ansprüche 1 bis 14, **dadurch gekennzeichnet, dass** die seitens des Telekommunikationsendgerätes vorliegenden digitalen Bildinformationen (11) mit einer digitalen Kamera erfasste Bildinformationen (11) sind.

16. Verfahren nach Anspruch 15, **dadurch gekennzeichnet, dass** die digitale Kamera mit dem Telekommunikationsendgerät verbindbar ist, vorzugsweise Bestandteil des Telekommunikationsendgerätes ist.

17. Verfahren nach einem der Ansprüche 1 bis 16, **dadurch gekennzeichnet, dass** die seitens des Telekommunikationsendgerätes vorliegenden digitalen Bildinformationen (9, 11) in einem digitalen Speichermittel des Telekommunikationsendgerätes gespeichert sind.

18. Verfahren nach Anspruch 17, **dadurch gekennzeichnet, dass** das Speichermittel austauschbar ist, vorzugsweise vom Typ Compact Flash, Multimedia Card (MMC), Secure Digital (SD) Card, Smart Media (SM) Card, IBM Microdrive oder Sony Memory Stick.

19. Verfahren nach einem der Ansprüche 1 bis 18, **dadurch gekennzeichnet, dass** im Rahmen eines Spiels wenigstens zwei verschiedene digitale Bildinformationen (9, 11), vorzugsweise zu vorgebbaren thematisierten Inhalten, von dem wenigstens einen Nutzer des Telekommunikationsendgerätes an das Datenverarbeitungssystem (5) übertragen werden müssen.

20. Verfahren nach einem der Ansprüche 1 bis 19, **dadurch gekennzeichnet, dass** im Rahmen des Spiels digitale Bildinformationen (9, 11) miteinander kombiniert werden müssen.

21. Verfahren nach einem der Ansprüche 1 bis 20, **dadurch gekennzeichnet, dass** das Spiel ein Puzzlespiel ist.

22. Verfahren nach einem der Ansprüche 1 bis 21, **dadurch gekennzeichnet, dass** das Spiel ein Bildinformationen-Sammelspiel ist.

23. Verfahren nach einem der Ansprüche 1 bis 22, **dadurch gekennzeichnet, dass** das Spiel ein Spiel zur Wiedererkennung von Bildinformationen (9, 11) ist, vorzugsweise zur Wiedererkennung von wenigstens zwei identischen Bildinformationen (9, 11) nach Art eines Memory- oder Bingo-Spiels.

24. Telekommunikationsendgerät zur Nutzung in Telekommunikationsnetzen, **dadurch gekennzeichnet, dass** dieses zur Ausführung eines Verfahrens nach einem der Ansprüche 1 bis 23 ausgebildet ist.

25. Telekommunikationsendgerät nach Anspruch 24, **dadurch gekennzeichnet, dass** dieses ein in Mobilfunknetzen (4) betreibbares mobiles Endgerät (1) ist.

26. Telekommunikationsendgerät nach Anspruch 25, **dadurch gekennzeichnet, dass** das mobile Endgerät (1) ein Mobilfunktelefon (1) ist, vorzugsweise ein Multimedia-Mitteilungsdienst (MMS)-fähiges Mobilfunktelefon (1) mit integrierter digitaler Kamera.

27. Telekommunikationsnetz mit zur Nutzung eines Verfahrens nach einem der Anspruche 1 bis 23 ausgebildeten Einrichtungen, vorzugsweise aufweisend wenigstens ein Datenverarbeitungssystem (5) eines Mobilfunknetzes (4) und/oder wenigstens ein mit einem Mobilfunknetz (4) verbindbares bzw. integriertes Datenverarbeitungssystem (5).
